# EUROPEAN PATENT SPECIFICATION

(11) **EP 3 325 427 B1**
(45) Date of publication and mention of the grant of the patent: **21.10.2020**
(21) Application number: 16742203.9
(22) Date of filing: 13.07.2016
(51) Int. Cl.: C04B 28/26, C04B 40/00

(54) **CLAY PLASTER**
LEHMPUTZ
PLÂTRE D'ARGILE

(30) Priority: 17.07.2015 PL 41317415
(43) Date of publication of application: 30.05.2018
(73) Proprietor: Formes Sp. z o.o., 32-087 Zielonki (PL)
(72) Inventor: SROCZYNSKI, Andrzej, 32-087 Zielonki (PL)
(74) Representative: AOMB Polska Sp. z.o.o.
(86) International application number: PCT/EP2016/066598
(87) International publication number: WO 2017/012936

(56) References cited:
- WO-A1-2004/076378
- US-A- 2 549 516
- US-A- 4 066 463
- US-A1- 2003 230 217

## Description

The object of the invention is a clay plaster.

A particular area of use of the invention are internal plaster walls and ceilings in places that are not directly exposed to flooding with water.

Known and so far used clay plasters are characterized by humidity homogenisation of mortar before application. Powder clay used in known clay plasters is only a binder material with the other ingredients and is added in an amount up to 40% by weight of the mortar. The other ingredients of known clay plasters are the fillers typically in the form of sand or organic ingredients in the form of sawdust or plant fibres and in this case serve mainly the functions of weakening the clay in order to avoid the substrate loosing and cracking while the mortar is drying.

A description of US Patent number US 807,586 called "Clay plaster" discloses a clay plaster comprising in its composition as binding materials clay and gypsum and aggregates and additives , improving the working parameters of the mortar and its rheology.

US 2003/230217 A1 discloses a clay plaster formulation.

A description of Polish Patent number 190627 called "Cement-free finishing mortar" discloses mortar used for sound-absorbing coating of interior walls and ceilings of the buildings comprising mainly the cotton fibres and expanded perlite, in the weight ratio of perlite and cotton of 10% -250%, preferably about 80%, wherein the particle size of the pearlite is not more than 5 mm.

Known methods for the application of plasters consist in substantially carrying out two layers of plaster: a first bottom layer with a thickness of 15 to 20 mm, which levels the surface of the structure and a second top layer with a thickness of 2 to 4 mm, which is a decorative layer deciding on the final roughness and the quality of the plaster surface. A method of preparing and applying such layers is reduced to the following operations in a given time: mixing dry mortar with sufficient amount of water and leaving wet mortar for several minutes to several hours for humidity homogenisaton; after complete soaking of all ingredients of mortar, followed by remixing. Thus prepared mortar is applied to the building element manually or mechanically on a suitably prepared substrate in two layers. After the initial drying of the levelling layer for an average of about one hour the levelling of the surface is performed, followed by another break which lasts for about three hours. After the three-hour break the surface of the applied in three-hour intervals plaster is smoothed. Then, the second top layer is applied.

Known plasters having a thickness of 3 mm to 60 mm contain small amounts of clay, and often result in shrinkage cracks. A disadvantage of these known clay plasters is the use of gypsum, finely ground blast furnace slag or Portland cement or lime as a binding material. Clay plasters known in the prior art do not provide the required microclimate in the rooms in which they are applied onto a substrate.

There are no clay plasters in the prior art in which the only material binding the mortar is clay, the content of which in the mortar is greater than 40% by weight.

The clay plaster according to the invention is defined in the appended claims and contains clay in a powder and granular form in an amount greater than 40% by weight, the amount of powder clay not exceeding 80% by weight of granular clay, wherein the plaster clay comprises a filler in an amount of not more than 60% by weight.

The clay plaster is the dry mixture of powder clay with a grain size up to 1.5 mm and granular clay with grain size larger than 1.5 mm up to grain size not exceeding the thickness of the layer of clay plaster applied onto the substrate. The clay plaster comprises a filler in an amount of not more than 60% by weight, which is a mineral filler in the form of aggregates, and/or an organic filler wherein the plaster clay resulting from mixing these ingredients contains additives increasing the adhesion to the substrate, additives delaying the time of granular clay soaking, retention additives and pigments in an amount of not more than 10% by weight based on the clay plaster dry matter. Clay plaster solvent is water in an amount of not more than 33% by weight based on clay plaster dry matter in the form of clay slurry or pure water. Preferably water glass, in an amount of about 10% by volume, is added to pure water.

Powder and granular clay contained in the clay plaster is of all types of clays defined as clay minerals, cohesive or as hydrated aluminosilicates, clay, loess and loam of one kind or a mixture thereof.

Preferably for plasters with a thickness of not more than 5 mm larger grains have a grain size of 3 to 5 mm, and for the plaster thickness of not more than 60 mm larger grains have a grain size of 5 mm to 40 mm, and in some cases up to 60 mm. Preferably, clay grains have a spherical shape, granular shape, the shape of irregular lumps or a shape of the irregular slate.

The clay plaster has also aggregates in an amount of not more than 60% by weight, which is a mineral filler and/or organic filler, and additives, plasticizers, fluidifying additives and thixotropic fluidifying additives plaster clay resulting from mixing of these ingredients under the influence of vibration. Moreover, the clay plaster contains additives to increase adhesion to the substrate, additives delaying the time of granular clay soaking, retention additives retaining the mixing water causing the extension of the presence of the operating parameters of mortar and pigments improving the aesthetics of the clay plaster. Other additives to be added outside the filler are not more than 10% by weight based on the clay plaster dry matter. Clay plaster solvent is water in an amount of not more than 33% by weight in the form of clay slurry or industrial pure water.

Preferably, clay added to the clay plaster is a mixture of different clays, which are then converted into granular clay.

Preferably, organic ingredients added to the clay plaster are light organic ingredients having a bulk density not exceeding 600 kg/m³ and heavy organic ingredients having a bulk density greater than 600 kg/m³. Both from the light organic ingredients and heavy organic ingredients in the process of preparing a dry mixture of plaster clay grains with the size of 3 mm to 60 mm are produced or their additive are used in the form of: grains, flakes, fibres.

In order to obtain clay grains according to the invention, large lumps acquired from the bed of clay, loam or loess are subjected to grinding or mechanical kneading through a screen with a specific mesh size, followed by a drying process conducted at a temperature of not more than 60°C. Preferably, clay grains are coated with other clays and/or additives in the form of means delaying the time of humidity homogenisation.

A method of its performance consists in rapid mixing of the dry ingredients of the clay plaster with an aqueous solvent immediately prior to its application to or during application onto the substrate. By mixing the dry ingredients of the clay plaster with an aqueous solvent clay plaster mortar is prepared ready for application onto a substrate. Thus mixed clay plaster is immediately applied to the substrate prepared as for other mineral plasters. Preferably, the clay plaster is applied onto the substrate after having applied a bonding layer in the form of clay slurry onto a dry substrate first.

The aqueous solvent is water or clay slurry, wherein the amount of water added does not exceed 33% by weight of clay plaster dry ingredients. The dry ingredients of the resulting clay plaster mortar are sprayed or mixed with water or with clay slurry so as to be uniformly distributed in the mass.

For the manual process of applying the mortar it is preferred to mix only small portions thereof in an amount of about 1 kg with immediate application and levelling.

For the mechanical process of applying the mortar it is preferred to throw dry ingredients with simultaneous spraying with an aqueous solvent in a similar manner as in the dry shotcrete application technology.

The aqueous solvent is applied in the minimum amount to provide stickiness and to obtain working consistency allowing the application of mortar onto the substrate with its simultaneous levelling.

The time elapsed from spraying or mixing the dry ingredients with water or clay slurry to applying the clay plaster with levelling is limited by thickening to the consistency preventing the execution of these activities. Thus, the process of manual or mechanical application or spraying the clay plaster onto the substrate is carried out while maintaining its humidity heterogeneity until the clay grains soak in. The levelling layer (or base layer) applied onto the substrate has a thickness of 3mm to 60 mm and is applied manually or mechanically with simultaneous surface levelling. In the method of performing the clay plaster, the clay plaster is applied in a single layer or several layers applied after the complete drying of the previous layers. After humidity homogenisation visualized by obtaining a uniform colour of applied clay plaster, preferably after the break, the duration of which is limited in obtaining said uniform colour the process of smoothing the outer surface of clay plaster is carried out to eliminate the granular structure of the surface. The operation of smoothing the surface is repeated several times after the appearance of shrinkage cracks and to eliminate them until the loss of plasticity of the surface visualized by the appearance of brightened areas. When the applied clay plaster dries completely understood as achieving a state of humidity equilibrium between the plaster and the surrounding air, the outer layer of decorative plaster is applied with a thickness not exceeding 3 mm, or the outer surface of the clay plaster is painted.

Preferably, the aqueous solvent is a clay slurry with a liquid consistency, being a mixture of water and clay, wherein the dry clay content is up to 66% by weight.

In order to determine the optimal composition due to the full adhesion of clay plaster to the substrate four samples with a minimum surface of 30x30 cm have to be performed with a clay content in an amount of more than 40%, more than 60%, more than 80% and 100% by weight, wherein the optimal sample is then selected for use. Sampling on the target substrate using the chosen technique of applying the mortar is a simple method for optimizing the composition and does not restrict the use of different characteristics which is the result of circumstances such as the specific characteristics of exploited deposits of clay, loam or loess; a method of producing grains of clay involving crushing large lumps or kneading them through a screen with a specific mesh size; type of solvent; a method of mixing the ingredients; a method of applying the clay plaster onto the substrate; a method of levelling the clay plaster applied onto the substrate and a method of forming the surface manually or mechanically; required parameters of surface quality; specific properties of additives and other less significant circumstances as substrate absorbency, ventilation during the drying process or the like.

The advantage of using the clay plaster according to the invention is their influence on the microclimate of the interior, and thus the improvement of health conditions of the housing. Clay is an excellent regulator of humidity and heat at an optimal level for man, therefore the more clay is in the wall covering or ceiling, the better the microclimate of the interior. For these reasons, it is preferred to use plaster containing at high proportion of clay to the other ingredients or even exclusively clay. The dry clay plaster according to the invention produced in the factory and packed into bags is a product ready to be used strictly according to instructions, that could be applied to the internal plaster with thin and thick layers and repairing deep cavities of the substrate for coatings improving the microclimate of the rooms.

The object of the invention is disclosed in the embodiments not limiting other possibilities:

### Example 1

In order to manually prepare a clay plaster with a thickness of 5 mm, the amounts of clay plaster ingredients were prepared suitable for the performance of four samples of dimensions 30x30 cm:
Lean clay with a grain size = 3mm containing 8.45% by weight of loam mixed with 75.16% by weight of sand dust in an amount of 830 g.

Fat clay with a grain size = 3mm containing 78% by weight of loam mixed with 21% by weight of sand dust in an amount of 830 g.

Lean clay in the form of a powder with a grain size not exceeding 0.5 mm containing 8.45% by weight of loam mixed with 75.16% by weight of sand dust in an amount of 720g.

Thus prepared ingredients were mixed for about 30 minutes, and then the following amounts of the ingredients were weighed from the prepared mixture of clay into samples:
I sample contained 330 g of clay mixture and 490 g of sand fraction 1 mm.
II sample contains 490 g of clay mixture and 330 g of sand fraction 1 mm.
III sample contains 660 g of clay mixture and 160g of sand fraction 1 mm.
IV sample contains 900 g of clay mixture.

40 g of red mineral pigment was poured into each sample, and then the ingredients were mixed in a drum mixer for about 30 minutes.

An aqueous solvent was prepared separately, by adding 10% of potassium water glass into the water, and then 300 g was poured into a hand sprayer, respectively.

A clay slurry was prepared as a bonding layer by pouring 660 g of lean clay into 330 g of water, leaving it for soaking in for 1 hour, and then mixing with a propeller stirrer until a homogeneous smear.

After preparing all the ingredients the samples were performed:
1) the surface of a concrete wall with the dimensions of about 30x30 cm was repainted with a clay slurry using a brush;
2) before the concentration of the bonding layer dry ingredients of the sample were applied and using a metal trowel vertically from bottom to top while pressing the dry clay plaster in the sticky slurry, until it completely covers the surface;
3) the resulting dry surface with a thickness of about 3 mm was then sprayed with an aqueous solution of water glass in the lowest possible amount, until the stickiness appropriate for the bonding layer was achieved.
4) dry ingredients of the sample were immediately applied for the second time and using a metal trowel vertically from bottom to top the dry clay plaster was pressed in the sticky slurry, until it completely covered the surface, while levelling it;
5) after about 30 minutes the mortar evenly soaked in obtaining a humidity homogenisation visualized with a uniform colour and then the surface of the clay plaster was smoothed and profiled in order to obtain the expected thickness of about 5 mm;
6) for sample I the use of an aqueous solvent in an amount 174 g based on 1000 g of dry mortar was reported;
7) during the drying the surface of the clay plaster was smoothed three times with a trowel at intervals of every four hours, until obtaining the finish coat;
8) these activities were performed on the remaining three samples each time reporting the consumption of aqueous solvent based on 1000 g of dry mortar obtaining appropriately for the following samples:
   I - 174 g;
   II - 179 g;
   III - 184 g;
   IV - 189 g;
9) after 14 days from application, samples completely dries out, the adhesion of the clay plaster to the entire surface of the substrate was checked by tapping it with a wooden hammer weighing 30 g;
10) the study showed complete adhesion of all samples and mesh of hairline cracks on the III sample and fine cracks on the IV sample, but IV sample was selected for further use because of its maximum clay content beneficial for health and visually attractive form of decorative cracks and discolouration;
11) the ingredients were mixed according to the formulation of IV sample obtaining 1000 kg of dry mortar packing it into bags with a product ready to be used, wherein the instructions for use indicated maximum amount of aqueous solvent in an amount of 189 g per 1000 g of the mortar. A clay mortar was obtained designed for making interior thin-layer clay plasters with decorative values and improving the microclimate of the rooms.

### Example 2

For performing the clay plaster with a thickness of 20 mm via spraying appropriate amounts of ingredients were prepared separately for performing four samples with the surface of 30x30 cm:
Sandy clay loam with a grain size of 3 mm to 6 mm in an amount of 50% by weight, and sandy clay loam with a grain size of 6 mm to 9 mm in an amount of 50% by weight containing 29% by weight of loam mixed with 54% by weight of sand dust in an amount of 7800 g.

Heavy filler in the form of gravel with an average grain size of about 4 mm in an amount of 6350 g.

The following amounts of ingredients for the samples were weighed of such prepared ingredients:
I sample contained 340 g of sandy clay loam and 600 g of gravel fraction 4 mm.
II sample contained 560 g of sandy clay loam and 400 g of gravel fraction 4 mm.
III sample contained 780 g of sandy clay loam and 200 g of gravel fraction 4 mm.
IV sample contained 1000 g of sandy clay loam.

Then the ingredients were mixed in a drum mixer for about 30 minutes.

The aqueous solvent in the form of a clay slurry was prepared separately, which due to the amount of fillers initially adopted the following composition per unit of dry ingredients:
for sample I 150 g of water was mixed with 60g of sandy clay loam,
for sample II 150 g of water was mixed with 40 g of sandy clay loam,
for sample III and IV 150 g of water was mixed with 20 g of sandy clay loam.

A clay slurry was prepared as a bonding layer by pouring 660 g of lean clay into 330 g of water, respectively, leaving it for soaking in for 1 hour, and then mixing with a propeller stirrer until a homogeneous grease-like consistency.

In order to determine the required amount of aqueous solvent, all the aqueous solvent was poured into the unit of dry ingredients of sample I and mixing in a drum mixer for 5 seconds water was additionally added, until the appropriate stickiness of the mortar.

Then the machine for spraying was prepared in the form of an apparatus for gunning using a dry mortar mix with a grain size up to 10 mm in the following manner:
- the mortar for the composition of sample I was added into a dry ingredients container;
- the slurry for the composition of sample I was added into a liquid medium container;
- the feeders were adjusted and synchronised according to the obtained formulation of the test butch in such a way that the sprayer fed 240 g of the clay slurry containing 180 g of water per 1000 g of dry ingredients.

After preparing the ingredients and the device the samples were performed:
1) the surface of a silicate wall with the dimensions of about 30x30 cm was repainted with a clay slurry using a brush;
2) before concentration of the binding layer the mortar of sample I was sprayed using a concrete gun which mixed dry ingredients with the slurry at the outlet of the nozzle;
3) the resulting wet surface with a layer thickness of about 20 mm was immediately levelled using a metal trowel;
4) after a period of about 35 minutes the mortar evenly soaked in obtaining a humidity homogenisation visualized with a uniform colour and then the surface of the plaster was smoothed and profiled in order to obtain the expected thickness of about 20 mm;
5) during the drying the surface of the plaster was smoothed three times with a trowel at intervals of every six hours, until obtaining the finish coat;
6) these activities were performed on the remaining samples each time reporting the consumption of aqueous solvent per unit of dry mortar obtaining appropriately for the following samples:
   I - 240g, including 180 g of water;
   II - 220 g, including 180 g of water;
   III - 200 g, including 180 g of water;
   IV - 215 g, including 195 g of water;
7) after 14 days from application, samples completely dries out, the adhesion of the plaster to the entire surface of the substrate was checked by tapping it with a wooden hammer weighing 30 g;
8) the study showed complete adhesion of samples I, II, III to the substrate and mesh of fine cracks on all the samples, but sample III was selected for further use because of its maximum clay content beneficial for health;
9) also for decorative purposes and for protecting the surface of the plaster according to the invention a typical thin-layer clay plaster was faced and after drying was ultimately painted with clay paint;
10) the ingredients were mixed according to the formulation of sample III obtaining 1000 kg of dry mortar and separating 100 kg of powder sandy clay loam packing it into the bags containing a product ready to be used in the form of dry ingredients of the mortar and separating the aqueous solvent ingredient, wherein the instructions for use indicated the maximum amount of the aqueous solvent in an amount of 200g containing 180g of water per 1000 g of mortar.

A clay mortar was obtained designed for making interior thick-layer plasters improving the microclimate of the rooms.

### Example 3

In order to manually prepare a clay plaster with a thickness of 50 mm, the following amounts of ingredients suitable for the performance of four samples of dimensions 30x30 cm were separately prepared:
Lean clay with a grain size from 30 mm to 45 mm containing 8.45% by weight of loam mixed with 75.16% by weight of sand dust in an amount of 15 000 g.

Heavy filler in the form of quartz sand a grain size from 0.8 mm to 2 mm in an amount of 3800 g.

Light filler in the form of coconut straw with a fibre length of 30 mm and a density of 0.044 kg/dm³ in an amount of 3800 ml.

The following amounts of ingredients for the samples were weighed of such prepared ingredients:
I sample contained 400 g of lean clay and 300g of sand and 300 ml of coconut straw.
II sample contains 600 g of lean clay and 200 g of sand and 200 ml of coconut straw.
III sample contains 800 g of lean clay and 100 g of sand and 100 ml of coconut straw.
IV sample contains 1000 g of lean clay.

Then the ingredients of individual samples were mixed in a drum mixer for about 30 minutes. Each sample was mixed separately.

An aqueous solvent in the form of a clay slurry was prepared separately, containing per unit of dry ingredients:
for sample I 180 g of water was mixed with 90 g of lean clay.
for sample II 180 g of water was mixed with 60 g of lean clay,
for sample III and IV 180 g of water was mixed with 30 g of lean clay.

A primer based on acrylic resin with a grain size up to 1 mm was prepared as a bonding layer.

After preparing the ingredients the samples were prepared as follows:
1) the bonding layer with a grain size up to 1 mm was applied onto the ceramic wall surface measuring about 30 x 30cm using a brush and allowed to dry for 24 hours;
2) to determine the required amount of an aqueous solvent, the aqueous solvent was dosed into the unit of dry ingredients of sample I mixed in a drum mixer for 5 minutes, until the desired stickiness of the mortar, which provides the adhesion of mortar of a certain grain size to the substrate;
3) after receiving the formulation of the test butch the ingredients were mixed in an amount corresponding to sample I;
4) after the bonding layer dried, the mortar of sample I was applied with a trowel and held against the wall with the aid of a large trowel for about 5 minutes, until the concentration of the mortar to provide stability on the wall, and then a surface of the layer having a thickness of about 50 mm was immediately levelled;
5) after about 50 minutes the clay plaster mortar evenly soaked in obtaining a humidity homogenisation visualized with a uniform colour and then the surface of the clay plaster was smoothed and profiled in order to obtain the expected thickness of about 50 mm;
6) for sample I the unit consumption of the aqueous solvent in the amount of 260g containing 175 g of water was reported, per unit of dry clay plaster containing 700 g of clay and sand and 300 ml and coconut straw;
7) during the drying the surface of the clay plaster was smoothed three times with a trowel at intervals of every twenty one hours, until obtaining the finish coat;
8) these activities were performed for the remaining samples each time reporting the consumption of aqueous solvent based on a unit of dry mortar obtaining appropriately for the following samples:
   I - 260 g;
   II - 240 g;
   III and IV- 210 g;
9) after 18 days from application, samples completely dries out, the adhesion of the plaster to the entire surface of the substrate was checked by tapping it with a wooden hammer weighing 30 g;
10) the study showed complete adhesion of only sample I and mesh of fine cracks on all the samples, as a consequence the formulation of sample I was selected for further use due to the optimal composition;
11) additionally the surface of the clay plaster according to the invention was protected by glueing a jute mesh with a mesh = 4 mm on the bonding layer, and then was faced with a typical dyed thin-layer clay plaster;
12) the ingredients were weighed according to the formulation of sample I consisting of 700 g of lean clay and sand and 300 ml of chopped straw obtaining the weight of 713 g of dry clay plaster;
13) the ingredients were mixed according to the formulation of sample I obtaining 1000 kg of dry clay plaster and separating 100 kg of powder lean clay packing it into the bags containing a product ready to be used in the form of dry ingredients of the mortar and separating the aqueous solvent ingredient, wherein the instructions for use indicated the maximum amount of the aqueous solvent in an amount of 260 g containing 175 g of water per 713 g of dry clay plaster and the necessity of mixing only such amount of mortar with the aqueous solvent that can be used within 10 minutes;
14) a clay plaster mortar was obtained designed to perform the repairs and restorations of deep cavities of the substrate for internal plasters to improve the microclimate of the rooms.

Clay plaster mortars obtained in the embodiments of the invention were tested and the results in the form of specific technical parameters distinguishing and identifying the invention, and in common with clay plasters are summarized in Tables 1 and 2.

**Table 1**

| Parameters identifying the invention | Thin-layer mortar | Thick-layer mortar | Casting mortar |
|---|---|---|---|
| Layer thickness (mm) | 3-10 | 10-40 | 40-60 |
| Mortar granulation (mm) | 0-0.5; 1; 3 | 3-9 | 0.8-2 i 30-45 |
| Clay content (%) | 100 | 80 | 62 |
| Percentage of granular clay (%) | 70 | 78 | 48 |
| Total ratio of water/dry ingredients (%) | 17.2 | 18 | 21 |
| Clay consumption time (min) | 0.05 | 0.45 | 10 |
| Water vapour absorption (g/m²/12h) | 94 | 72 | 61 |
| Shrinkage (%) | 4 | 2.5 | 1 |
| Water vapour permeability | 6 | 8 | 7 |

**Table 2**

| Common parameters with clay plaster | Thin-layer mortar | Thick-layer mortar | Casting mortar |
|---|---|---|---|
| The density of dry plaster (kg/dm³) | 1.82 | 1.96 | 1.26 |
| Flexural strength (N/mm²) | 1.3 | 0.9 | 1.2 |
| Compressive strength (N/mm²) | 3.6 | 2.8 | 1.9 |
| Adhesion to the substrate (N/mm²) | 0.41 | 0.29 | 0.15 |

## Claims

1. A clay plaster comprising clay and optionally aggregates in the form of sand, organic and/or mineral fillers, **characterized in that** it comprises clay in an amount of more than 40% by weight, preferably more than 60% by weight, and more preferably more than 80% by weight, and most preferably 100% by weight of content based on the clay plaster dry matter, wherein the clay is in a powder form having grain size of up to 1.5 mm and granular form having grain size larger than 1.5 mm up to grain size not exceeding the thickness of the layer of clay plaster applied to the substrate, whereby the amount of clay powder does not exceed 80% by weight of the granular clay and optionally comprises a mineral and/or organic filler in an amount of not more than 60% by weight, as well as possible modifying additives, additives increasing the adhesion to the substrate, additives delaying the time of granular clay soaking, retention additives and/or pigments, wherein the amount of additives is not more than 10% by weight based on the clay plaster dry matter.

2. The plaster according to claim 1, **characterized in that** powder or granular clay contained in the clay plaster are of all types of clays defined as clay minerals, cohesive or as hydrated aluminosilicates, including clay, loess and loam of one kind or a mixture thereof.

3. The plaster according to claim 1 or 2, **characterized in that** clay plaster solvent is water, in the form of clay slurry or pure water, in an amount of not more than 33% by weight based on clay plaster dry matter.

4. The plaster according to claim 3, **characterized in that** it also contains plasticizers, fluidifying additives and thixotropic additives fluidifying under the influence of vibration, whereas the clay plaster solvent in the form of water comprises 10% of water glass.

5. The plaster according to any one of the claims 1 - 4, **characterized in that** it contains clay representing a mixture of different clays, processed into granular clay.

6. The plaster according to any one of the claims 1 to 5, **characterized in that** it contains a filler including light organic ingredients having a bulk density not exceeding 600 kg/m³ and heavy organic ingredients having a bulk density greater than 600 kg/m³, wherein the filler is in the form of grains, i/or flakes, and/or fibres and/or having grain size of 3 mm to 60 mm.

## Patentansprüche

1. Lehmputz, umfassend Lehm sowie gegebenenfalls Zuschlag in Form von Sand, organische und/oder mineralische Füllstoffe, **gekennzeichnet dadurch, dass** er Lehm in einem Anteil von mehr als 40 Gew.-%, bevorzugter mehr als 60 Gew.-%, noch bevorzugter mehr als 80 Gew.-%, und am meisten bevorzugt 100 Gew.-%, bezogen auf das Trockengewicht des Lehmputzes, enthält, wobei der Lehm in Pulverform mit Körnern von einer Größe bis zu 1,5 mm und in körniger Form mit Körnern größer als 1,5 mm bis zu Körnern mit einer Größe, die die Stärke der auf den Untergrund aufzubringenden Lehmputzschicht nicht überschreitet, vorliegt, wobei der Anteil an Lehmpulver 80 Gew.-% der Menge des körnigen Lehms nicht überschreitet, und gegebenenfalls einen mineralischen und/oder organischen Füllstoff in einem Anteil von nicht mehr als 60 Gew.-%, wie auch optionale modifizierende Zusätze, Zusätze, die die Haftung auf dem Substrat erhöhen, Zusätze, die die Einweichzeit von körnigem Lehm verzögern, Retentionsmittel und/oder Pigmente, enthält, wobei die Menge der Zusätze nicht mehr als 10 Gew.-% bezogen auf das Trockengewicht des Lehmputzes, beträgt.

2. Putz nach Anspruch 1, **gekennzeichnet dadurch, dass** der im Lehmputz in Pulverform und in körniger Form enthaltene Lehm alle Lehmarten, die als Tonminerale, kompakte oder hydratisierte Aluminiumsilikate, einschließlich Lehme, Tone und Lösse einer Art oder Gemische davon, definiert sind, darstellt.

3. Putz nach Anspruch 1 oder 2, **gekennzeichnet dadurch, dass** das Lösungsmittel für den Lehmputz Wasser ist, in Form von Lehmschlamm oder reinem Wasser, in einem Anteil von nicht mehr als 33 Gew.-%, bezogen auf das Trockengewicht des Lehmputzes.

4. Putz nach Anspruch 3, **gekennzeichnet dadurch, dass** er ferner Plastifizierungszusätze, Fließmittel und unter Einwirkung von Erschütterungen verflüssigende thixotrope Zusätze enthält, wobei das Lösungsmittel für den Lehmputz in Form von Wasser 10% Wasserglas enthält.

5. Putz nach einem der Ansprüche 1 bis 4, **gekennzeichnet dadurch, dass** er einen Lehm enthält, der ein Gemisch von verschiedenen, zu körnigem Lehm verarbeiteten Lehmen ist.

6. Putz nach einem der Ansprüche 1 bis 5, **gekennzeichnet dadurch, dass** er einen Füllstoff umfasst, der leichte organische Bestandteile mit einer Schüttdichte von nicht mehr als 600 kg/m³ und schwere organische Bestandteile mit einer Schüttdichte von mehr als 600 kg/m³ umfasst, wobei der Füllstoff in Form von Körnern, und/oder Schuppen, und/oder Fasern vorliegt und/oder aus Körnern mit einer Größe von 3 bis zu 60 mm besteht.

## Revendications

1. Un enduit d'argile comprenant de l'argile et éventuellement des agrégats sous forme de sable, de charges organiques et/ou minérales, **caractérisé en ce qu'**il comprend de l'argile en une quantité de plus de 40% en poids, de préférence plus de 60% en poids, et plus préférentiellement plus de 80% en poids, et le plus préférablement 100% en poids de teneur sur la base de la matière sèche de l'enduit d'argile, dans lequel l'argile est sous forme de poudre ayant une granulométrie jusqu'à 1,5 mm et une forme granulaire ayant une granulométrie supérieure à 1,5 mm jusqu'à une granulométrie ne dépassant pas l'épaisseur de la couche d'enduit d'argile appliquée sur le substrat, dans lequel la quantité de poudre d'argile ne dépasse pas 80% en poids de l'argile granulaire et comprend éventuellement une charge minérale et/ou organique en une quantité ne dépassant pas 60% en poids, ainsi que d'éventuels additifs de modification, des additifs augmentant l'adhérence au substrat, des additifs retardant le trempage de l'argile granulaire, des additifs de rétention et/ou des pigments, dans lequel la quantité d'additifs n'est pas supérieure à 10% en poids par rapport à la matière sèche de l'enduit d'argile.

2. L'enduit selon la revendication 1, **caractérisé en ce que** l'argile en poudre ou granulaire contenue dans l'enduit d'argile est de tous types d'argiles définies comme minéraux argileux, cohésifs ou comme aluminosilicates hydratés, y compris l'argile, le loess et le limon d'un type ou un mélange de ceux-ci.

3. L'enduit selon la revendication 1 ou 2, **caractérisé en ce que** le solvant pour enduit d'argile est l'eau, sous forme de pâte d'argile ou d'eau pure, en une quantité ne dépassant pas 33% en poids sur la base de la matière sèche de l'enduit d'argile.

4. L'enduit selon la revendication 3, **caractérisé en ce qu'**il contient également des plastifiants, des additifs fluidifiants et des additifs thixotropes fluidifiant sous l'effet des vibrations, alors que le solvant pour enduit d'argile sous forme d'eau comprend 10% de verre liquide.

5. L'enduit selon l'une quelconque des revendications 1 à 4, **caractérisé en ce qu'**il contient de l'argile représentant un mélange d'argiles différentes, transformé en argile granulaire.

6. L'enduit selon l'une quelconque des revendications 1 à 5, **caractérisé en ce qu'**il contient une charge comprenant des ingrédients organiques légers ayant une densité apparente ne dépassant pas 600 kg/m³ et des ingrédients organiques lourds ayant une densité apparente supérieure à 600 kg/m³, dans lequel la charge est sous forme de grains et/ou flocons, et/ou fibres et/ou a une granulométrie de 3 mm à 60 mm.
